# EUROPÄISCHE PATENTSCHRIFT

(11) **EP 1 637 708 B1**
(45) Veröffentlichungstag und Bekanntmachung des Hinweises auf die Patenterteilung: **27.06.2018**
(21) Anmeldenummer: 05019289.7
(22) Anmeldetag: 06.09.2005
(51) Int. Cl.: F01P 7/12, G05D 23/19, B60K 11/08

(54) **Vorrichtung zur Steuerung eines Luftklappensystems eines Kraftfahrzeugs**
Device for controlling an air flap system of a motor vehicle
Dispositif de commande d'un système de clapet d'air d'un véhicule automobile

(30) Priorität: 15.09.2004 DE 102004045019
(43) Veröffentlichungstag der Anmeldung: 22.03.2006
(73) Patentinhaber: MAHLE Behr GmbH & Co. KG, 70469 Stuttgart (DE)
(72) Erfinder: Bielesch, Thomas, 75417 Mühlacker (DE)
(74) Vertreter: Grauel, Andreas

(56) Entgegenhaltungen:
- WO-A1-00/12901
- DE-A1- 10 223 686
- GB-A- 586 031
- JP-U- 49 008 625

## Beschreibung

Die Erfindung betrifft eine Vorrichtung zur Steuerung eines Luftklappensystems eines Kraftfahrzeugs nach dem Oberbegriff des Anspruchs 1.

Moderne Kühlsysteme, insbesondere für Antriebe von Kraftfahrzeugen, unterliegen zunehmend Anforderungen einer aufwendigen Steuerung zur Optimierung der Kühlleistung in Abhängigkeit des Betriebszustandes des Antriebs. Dabei ist es gewünscht, daß im Bereich eines Kühlers angeordnete verstellbare Luftklappen wie etwa Lamellen oder Jalousien definiert verstellt werden können. Insbesondere sind dabei Rückmeldungen über die Stellung der Luftklappen an eine Steuerungseinheit des Kühlsystems gewünscht

DE 102 23 686 A1 beschreibt ein Stellglied mit einem beheizbaren Dehnstoffelement zur Betätigung einer Kühlerjalousie oder eines Thermostatventils, wobei ein Heizstromkreis in einer Endstellung des Stellgliedes durch einen von dem Stellglied betätigten Schalter unterbrochen wird.

Es ist die Aufgabe der Erfindung, eine Vorrichtung zur Steuerung eines Luftklappensystems eines Kraftfahrzeugs anzugeben, mittels derer eine Stellung der Luftklappen auf einfache Weise und zuverlässig überwacht werden kann.

Diese Aufgabe wird für eine eingangs genannte Vorrichtung zur Steuerung eines Luftklappensystems eines Kraftfahrzeugs erfindungsgemäß mit den kennzeichnenden Merkmalen des Anspruchs 1 gelöst.

Durch die zumindest zwei auslesbaren Positionen ist vorteilhaft eine Überwachung der Luftklappenstellung ermöglicht, wobei insbesondere eine Grundstellung vor Beginn einer Stellbewegung des Stellgliedes und eine vollständig oder zumindest weitgehend ausgefahrene Position des Stellgliedes feststellbar sind.

Erfindungsgemäß ist das Luftklappensystem Bestandteil eines Hauptkühlers eines Kühlsystems für einen Verbrennungsmotor des Kraftfahrzeugs, wodurch eine verbesserte Steuerung der Kühlung des Verbrennungsmotors ermöglicht ist.

Erfindungsgemäß ist das elektrische Signal mittels eines Spannungsteilers aus einer Versorgungsspannung generierbar, wodurch geringe Herstellungskosten und hohe Zuverlässigkeit ermöglicht sind.

Erfindungsgemäß ist das Stellelement als Dehnstoffelement, bevorzugt mit einer Heizeinrichtung, ausgebildet, wobei die Heizeinrichtung mittels der Versorgungsspannung betreibbar ist. Insgesamt wird dadurch ein kostengünstiges und zuverlässiges Stellelement mit einem hohen Steuerungskomfort kombiniert.

Bevorzugt umfaßt die Meßvorrichtung einen ersten Schalter und einen zweiten Schalter, wobei der erste Schalter durch Erreichen der ersten Position des Stellgliedes und der zweite Schalter durch Erreichen der zweiten Position des Stellgliedes betätigbar ist. Hierdurch können die Positionen des Stellgliedes einfach und zuverlässig gemessen werden. Je nach Anforderungen und zur weiteren Erhöhung der Steuerungsmöglichkeiten kann auch zumindest ein dritter Schalter zum Auslesen einer dritten Position des Stellgliedes vorgesehen sein, wobei der dritte Schalter durch Erreichen der dritten Position des Stellgliedes betätigbar ist.

In einer besonders bevorzugten Ausführung der Erfindung umfaßt die Meßvorrichtung ein stufenloses Meßglied, wobei in einem Bewegungsbereich des Stellgliedes die Position des Stellgliedes in ein von ihr abhängiges elektrisches Signal umwandelbar ist. Hierdurch ist eine sehr genaue Kontrolle der Luftklappen ermöglicht, und insbesondere ein zeitliches Verhalten der Luftklappenverstellung ist besonders genau ermittelbar. Zur einfachen Realisierung eines stufenlosen Meßgliedes umfaßt dieses vorteilhaft einen verstellbaren elektrischen Widerstand. So kann etwa durch mechanische Koppelung von Stellglied und verstellbarem Widerstand ein zuverlässiges stufenloses Meßglied bereitgestellt werden.

Erfindungsgemäß können die Meßvorrichtung und das Stellglied als Baueinheit ausgebildet sein, wobei die Baueinheit mit einer ihr zugeordneten Steuereinheit mittels genau einer elektrischen Signalleitung zur Meldung der Stellgliedposition verbunden ist. Auf diese Weise wird Aufwand bei der Verkabelung der Baueinheit eingespart. Besonders einfach und somit vorteilhaft ist dabei den verschiedenen auslesbaren Positionen des Stellgliedes jeweils eine unterschiedliche Spannung der Signalleitung zugeordnet.

Bevorzugt ist das elektrische Signal mittels einer prozessorgesteuerten Steuerschaltung auslesbar. Auf diese Weise ist eine besonders variable Steuerung der Vorrichtung bzw. der Luftklappen ermöglicht, wobei zudem wichtige Parameter wie etwa ein zeitliches Verhalten der Stellgliedposition auf einfache Weise ermittelt werden können. Zudem kann hierdurch eine Fehlerdiagnose des Systems hinsichtlich Kabelbruch oder anderen Fehlfunktionen auf einfache Weise bereitgestellt werden.

Weitere Merkmale und Vorteile der Erfindung ergeben sich aus den nachfolgend geschilderten Ausführungsbeispielen sowie aus den abhängigen Ansprüchen.

Nachfolgend werden drei bevorzugte Ausführungsbeispiele einer erfindungsgemäßen Vorrichtung beschrieben und anhand der anliegenden Zeichnungen näher erläutert.
- Fig. 1: zeigt eine räumliche Darstellung eines als Dehnungselement ausgebildeten Stellelements einer erfindungsgemäßen Vorrichtung.
- Fig. 2: zeigt eine schematische Darstellung einer erfindungsgemäßen Vorrichtung gemäß einem ersten Ausführungsbeispiel, wobei das Stellglied in einer Grundstellung ist.
- Fig. 3: zeigt die Vorrichtung aus Fig. 2, wobei das Stellglied sich in einer teilweise ausgefahrenen Position befindet.
- Fig. 4: zeigt die Vorrichtung aus Fig. 2 bei vollständig ausgefahrenem Stellglied.
- Fig. 5: zeigt eine schematische Darstellung einer erfindungsgemäßen Vorrichtung gemäß einem zweiten Ausführungsbeispiel.
- Fig. 6: zeigt eine schematische Darstellung einer erfindungsgemäßen Vorrichtung gemäß einem ersten Ausführungsbeispiel.

Gemäß dem ersten Ausführungsbeispiel umfaßt die Vorrichtung ein Stellelement 1, das einen ortsfest montierten Grundkörper 1b und ein demgegenüber linear bewegliches Stellglied 2 umfaßt. Das Stellglied 2 ist mit einem nicht dargestellten Luftklappensystem verbunden, so daß die lineare Bewegung des Stellgliedes 2 eine Öffnungs- oder Schließbewegung zumindest einer Luftklappe bedingt.

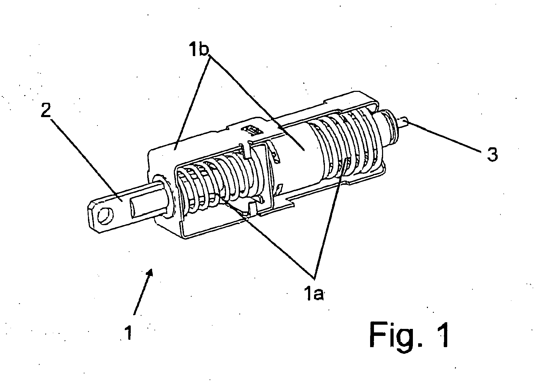

Vorliegend ist das Stellelement 1 als Dehnstoffelement ausgebildet (siehe Fig. 1), wobei das Stellglied 2 einen Zylinder umfaßt, der bei Erwärmung eines gekapselten Dehnstoffvolumens aus dem Grundkörper 1b herausgedrückt wird. Dies kann sowohl durch eine äußere Erwärmung des Stellelements 1 erfolgen als auch durch eine Bestromung eines in dem Stellelement angeordneten elektrischen Heizelements. Zur Kontaktierung des Heizelements weist das Stellelement einen Massepol auf, der dem Gehäuse entspricht und einen Pol 3 zum Anschluß einer Versorgungsspannung. Die Bewegung des Stellgliedes 2, insbesondere die Rückbewegung bei Erkalten des Dehnstoffes, wird durch vorgesehene Federn 1a unterstützt.

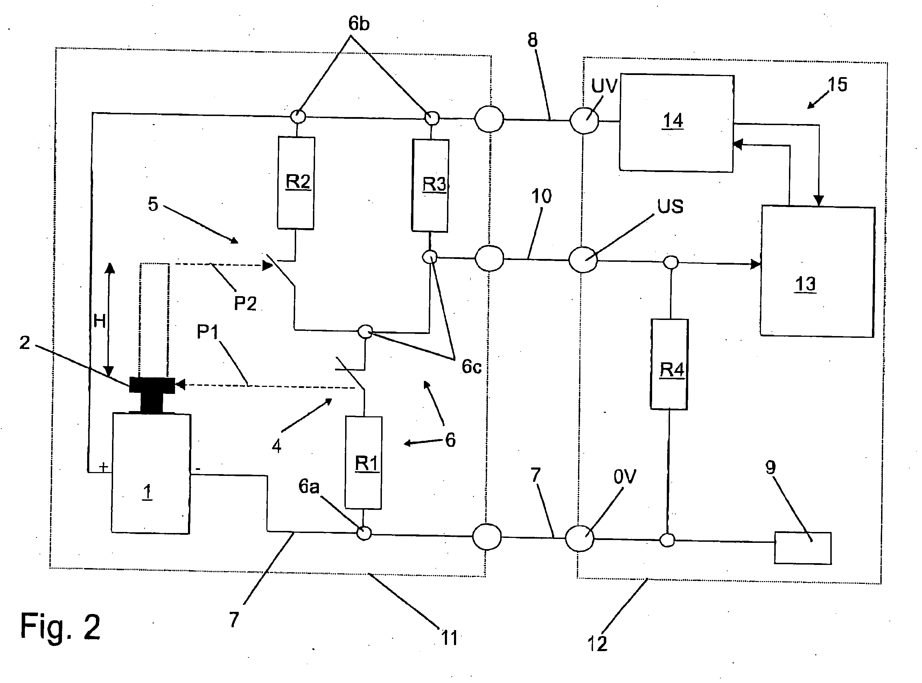

Der Hub H des Stellgliedes 2 ist in den schematischen Fig. 2 bis Fig. 4 jeweils als gepunktete Linie dargestellt. Entlang des Stellgliedweges oder Hubs H ist ein erster Schalter 4 und ein zweiter Schalter 5 vorgesehen. Die Schalter sind vorliegend als mechanische Schalter ausgebildet, wobei aber auch elektronische Schalter denkbar sind, die etwa mittels Magnetfeldem oder Licht ansteuerbar sind.

Die beiden Schalter 4, 5 sind über ein Widerstandsnetzwerk 6 elektrisch kontaktiert. Das Netzwerk ist zwischen einer Masseleitung 7 (Minuspol einer Fahrzeugbatterie 9) und einer die Versorgungsspannung für das Dehnelement führenden Leitung 8 angeordnet. Ein erster Knoten 6a des Netzwerks ist mit der Masseleitung 7 verbunden und ein zweiter Knoten 6b ist mit der Versorgungsspannung 8 verbunden.

Mit dem ersten Knoten 6a ist ein erster Widerstand R1 und seriell nachfolgend der erste Schalter 4 verbunden. Ausgangsseitig des ersten Schalters 4 folgt ein dritter Knoten 6c des Netzwerks, in dem eine Verzweigung in zwei Zweige erfolgt. In dem ersten Zweig ist seriell zunächst der zweite Schalter 5 und diesem nachfolgend ein zweiter Widerstand R2 angeordnet. In dem anderen Zweig ist lediglich ein dritter Widerstand R3 angeordnet. Die Widerstände R2 und R3 sind auf ihrer dem dritten Knoten 6c abgewandten Seite in dem zweiten Knoten 6b mit der Versorgungsspannung 8 verbunden.

Von dem dritten Knoten 6c zweigt zudem eine Signalleitung 10 ab, die gemäß nachfolgender Beschreibung mit der elektrischen Information über die Position des Stellgliedes 2 belegt ist. Das Netzwerk 6 mit den Schaltem 4, 5 und seinen Anschlüssen an Versorgungsleitung 8 und Masseleitung 7 bildet insgesamt eine Meßvorrichtung aus, mittels derer Positionen des Stellgliedes 2 gemessen und in elektrische Signale umgewandelt werden können. Das Stellelement 1 und die Meßvorrichtung 4, 5, 6 gemäß vorstehender Beschreibung sind vorzugsweise als gemeinsame Baueinheit 11 ausgebildet. Dies ist in den Zeichnungen Fig. 2 bis Fig. 4 als die Baueinheit 11 umgebender Kasten aus einer punktierten Linie gekennzeichnet. Diese Baueinheit 11 ist lediglich über drei elektrische Leitungen, nämlich die Versorgungsleitung 8, die Masseleitung 7 (welche gemäß der Funktion der Fahrzeugmasse nicht zwingend als separates Kabel ausgebildet sein muß) und die Steuerleitung 10, mit einer Steuereinheit oder Steuerschaltung 12 verbunden. Die Steuerschaltung 12 umfaßt eine Prozessoreinheit 13 mit einem programmierbaren Mikroprozessor sowie eine Leistungsendstufe 14. Prozessoreinheit 13 und Endstufe 14 sind über einen Steuerbus 15 miteinander verbunden, mittels dessen Ansteuerung und Kontrolle der Endstufe 14 durch die Prozessoreinheit 13 erfolgt.

Die Signalleitung 10 ist mit der Prozessoreinheit 13 verbunden. Dabei ist ein vierter Widerstand R4 zwischen Signalleitung 10 und Masseleitung 7 geschaltet. Gemäß der Darstellung ist Widerstand R4 im Bereich der Steuereinheit 12 angeordnet. Allgemein kann er aber auch im Bereich der Baueinheit 11 angeordnet sein. Hinsichtlich seiner Funktion ist er Teil des Netzwerks 6.

Vorliegend sind die Widerstände R1 bis R4 sämtlich ohm'sche Widerstände; allgemein können sie jedoch auch von komplexer Impedanz sein. Dabei sind R3 und R4 etwa gleich groß. R1 und R2 sind jeweils deutlich kleiner als R3 bzw. R4. Damit ergibt sich die Funktion der Vorrichtung wie folgt:
In der dem vollständig eingezogenem Stellglied 2 entsprechenden ersten auslesbaren Position P1 oder Grundposition des Stellelements (siehe Fig. 2) ist der erste Schalter 4 durch das Stellglied betätigt und vorliegend geschlossen, wogegen der am anderen Ende des Stellgliedweges angeordnete zweite Schalter 5 nicht betätigt und offen ist. Da R1 deutlich kleiner als R4 ist, wird die Versorgungsspannung (nachfolgend UV genannt; die Batteriespannung 7 sei allgemein Null Volt (0V)) am Ort der Signalleitung in guter Näherung im Verhältnis R1 zu R3 geteilt. Es liegt somit an der Signalleitung eine Spannung US von 0V < US << 0,5 UV an.

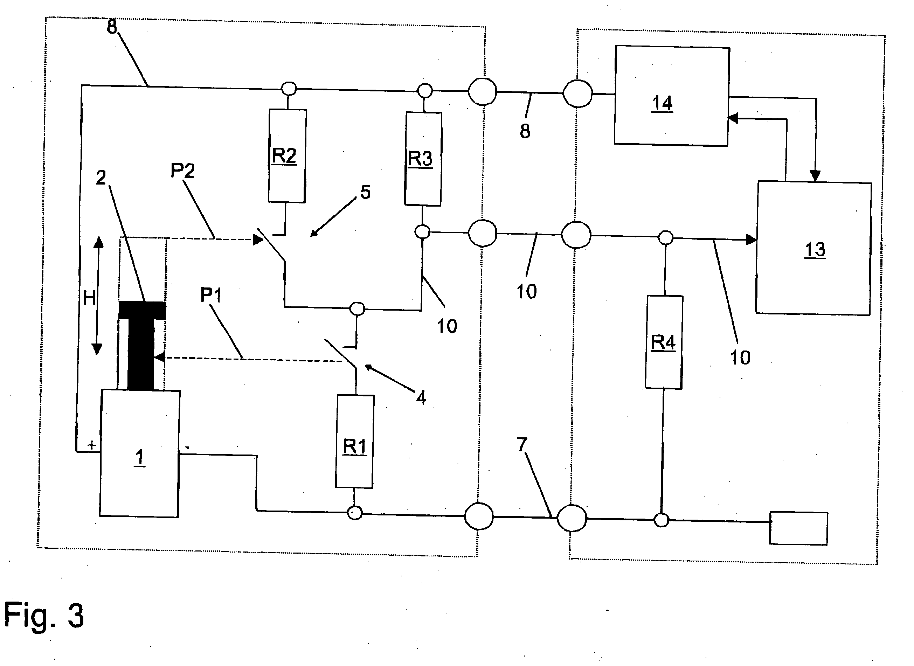

In der Zwischenstellung des Stellgliedes 2 gemäß Fig. 3 ist keiner der beiden Schalter 4, 5 betätigt, so daß beide Schalter geöffnet sind. Daher bilden die gleich großen Widerstände R3 und R4 einen symmetrischen Spannungsteiler, und die Signalspannung US beträgt etwa 0,5 UV.

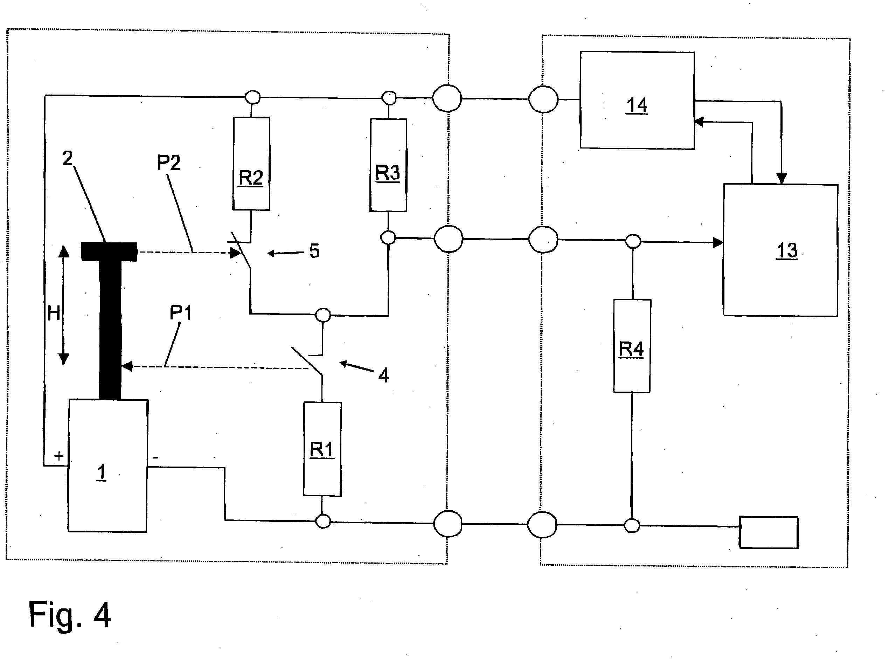

In der zweiten auslesbaren Position P2 bzw. der maximal ausgefahrenen Stellung des Stellgliedes 2 gemäß Fig. 4 ist der erste Schalter 4 geöffnet und nur der zweite Schalter 5 durch das Stellglied 2 betätigt und geschlossen. Da R2 deutlich kleiner als R3 ist, bilden R2 und R4 in guter Näherung einen Spannungsteiler und die Signalspannung beträgt 0,5 UV << US < UV.

Somit ist jedem der Stellgliedzustände "vollständig eingefahren" (erste auslesbare Position P1), "teilweise ausgefahren" und "vollständig ausgefahren" (zweite auslesbare Position P2) genau ein verschiedener Spannungswert US der Signalleitung zugeordnet. Der Spannungswert US ist jeweils relativ zu der Versorgungsspannung UV, wobei dieser jedoch der Prozessoreinheit 13 über den Steuerbus 15 bekannt ist. Im Allgemeinen wird die Versorgungsspannung UV auch nicht in ihrer Größe variabel sein. Eine dosierte Heizung des Dehnstoffelements 1 wird vielmehr durch eine gesteuerte Pulsung der Versorgungsspannung UV erfolgen.

Das zuvor beschriebene System besitzt zudem eine gute Möglichkeit der Selbstkontrolle hinsichtlich von Kabelbrüchen zwischen Baueinheit 11 und Steuerschaltung 12:
Ist etwa die Versorgungsleitung 8 unterbrochen, so wird der Endstufe 14 kein Strom entnommen. Dies ist allgemein durch die Prozessoreinheit 13 feststellbar.

Ist die Signalleitung 10 unterbrochen, so liegt der Signaleingang immer auf Massepotential 0V, insbesondere unabhängig davon, wie lange das Dehnstoffelement mit Heizstrom bestromt wird.

Im Falle eines Kurzschlusses von Versorgungsspannung UV und Masseleitung liegt zudem eine Signalspannung von 0V an, was die Kurzschlußdiagnose verbessert.

Ist die Masseleitung 7 unterbrochen, so liegt an der Signalleitung 10 immer Potential 0,5 UV an, unabhängig davon, wie lange das Heizelement bestromt wird. Durch die Unterbringung des Widerstands R4 im Bereich der Steuereinheit 12 wird somit eine Unterscheidung möglich, ob bei nicht entnommener Leistung die Masseleitung 7 oder die Versorgungsleitung 8 unterbrochen ist, da in letzterem Fall die Signalspannung 0V beträgt.

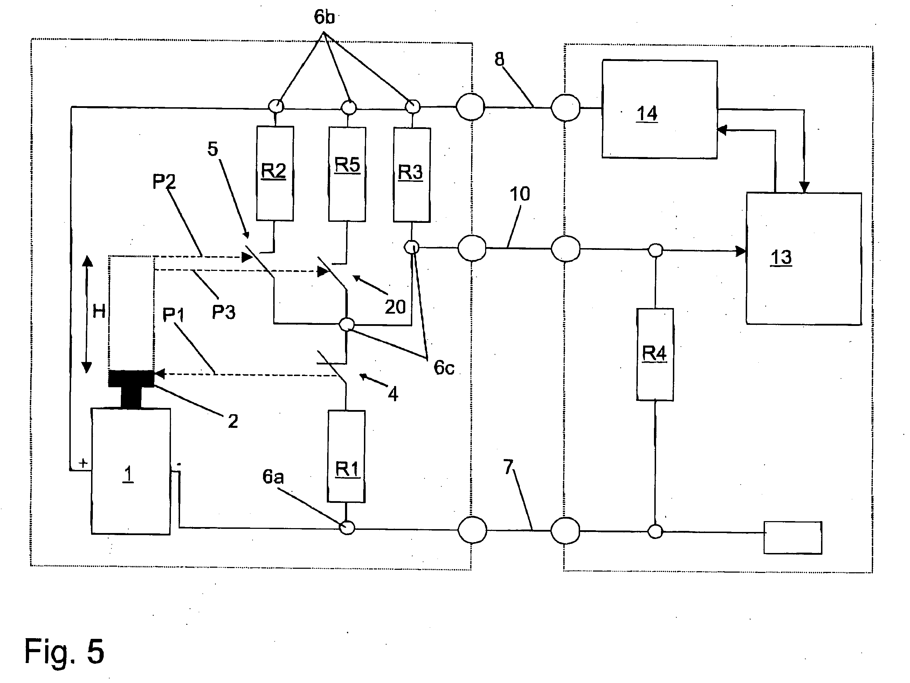

Das zweite Ausführungsbeispiel gemäß Fig. 5 unterscheidet sich von dem ersten Ausführungsbeispiel wie folgt:
Zusätzlich zu den im ersten Beispiel beschriebenen Komponenten ist ein dritter Schalter 20 und ein fünfter Widerstand R5 vorgesehen. Der dritte Schalter 20 ist einenends mit dem dritten Knoten 6c verbunden. Der fünfte Widerstand verbindet das andere Ende des dritten Schalters 20 mit dem zweiten Knoten 6b. Die Widerstände R2, R3 und R5 sind somit parallel zwischen den Knoten 6b und 6c angeordnet.

Mechanisch wird der dritte Schalter 20 in einer teilweise ausgefahrenen Stellung des Stellgliedes 2 betätigt, die im vorliegenden Beispiel kurz vor Erreichen der Endposition des Stellgliedes 2 vorliegt. Diese Position ist eine dritte auslesbare Position P3 des Stellgliedes. In dieser Position P3 ist der erste Schalter 4 geöffnet, der zweite Schalter 5 geöffnet und der dritte Schalter 20 geschlossen. Der fünfte Widerstand R5 hat einen Wert, der von dem des zweiten Widerstandes R2 abweicht, aber kleiner als der des dritten Widerstandes R3 ist. Die der dritten Position zugeordnete Signalspannung ist somit größer als 0,5 UV, jedoch kleiner als die dem zweiten Schalter 5 zugeordnete Signalspannung. Insgesamt liegen somit je nach Stellung des Stellgliedes 2 vier unterschiedliche Signalspannungen US vor.

Es kann für den Betrieb der Vorrichtung etwa vorgesehen sein, daß die dritte auslesbare Position P3 gehalten werden soll, ohne daß das Stellglied 2 vollständig ausgefahren wird. Hierzu wird das Dehnstoffelement so lange mit einer Gleichspannung bestromt, bis die dritte auslesbare Position P3 erreicht wird. Nun beginnt die Endstufe, das Stellelement 2 mit einer gepulsten Spannung von einstellbarem Tastverhältnis (PWM-Signal) zu bestromen. Das Tastverhältnis wird dabei von der Prozessoreinheit 13 so eingeregelt, daß das Stellglied 2 in der dritten Position P3 verbleibt. Eine Fehlsteuerung ist dadurch vermeidbar, daß beidseits der dritten Position P3 auslesbare Positionen P1, P2 mit unterschiedlichen Spannungen vorliegen. Insbesondere wird bei Spannung 0,5 V im allgemeinen die Leistung erhöht werden. Sollte widrigenfalls das Stellglied bereits oberhalb der dritten Position befindlich sein, was eine Verringerung der Leistung erfordern würde, so würde dieser Fehlzustand in Kürze durch das Erreichen der Endposition (zweite auslesbare Position P2) erkannt werden.

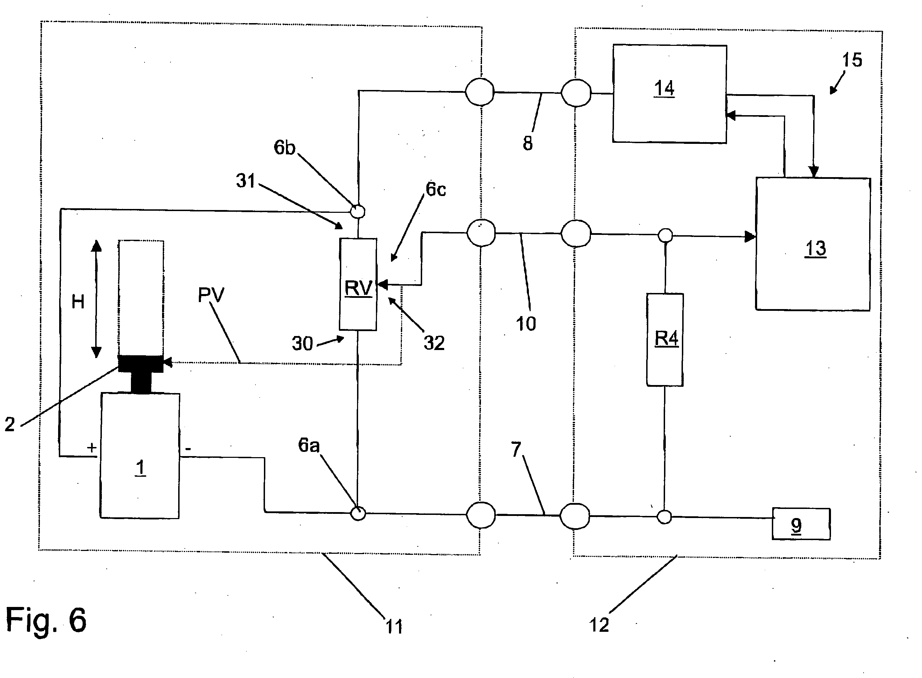

Das dritte Ausführungsbeispiel gemäß Fig. 6 unterscheidet sich von dem ersten Ausführungsbeispiel dadurch, daß das Netzwerk 6 durch einen einstellbaren ohm'schen Widerstand RV ersetzt ist. Dieser weist einen ersten Grundanschluß 30 auf, der mit der Masseleitung 7 verbunden ist und einen zweiten Grundanschluß 31, der mit der Versorgungsleitung 8 verbunden ist. Zwischen den Grundanschlüssen 30, 31 liegt ein konstanter Maximalwert des Widerstandes RV an. Ein verstellbarer Abgriff 32, der etwa als Schleifkontakt über einer Kohlebahn ausgebildet sein kann, ist mit der Signalleitung 10 verbunden. Weiterhin ist der Widerstand R4 zwischen Signalleitung 10 und Masseleitung 7 im Bereich der Steuerschaltung 12 vorhanden. Hierdurch kann die Fehlerdiagnose des Systems wie zuvor beschrieben verbessert werden. Der verstellbare Widerstand RV bildet allerdings bereits für sich einen Spannungsteiler 6 aus.

Der Abgriff 32 ist mechanisch mit dem Stellglied 2 verbunden, so daß eine Bewegung des Stellgliedes 2 eine Bewegung des Abgriffs 32 über der Kohlebahn erzeugt. Auf diese Weise ist stufenlos jeder Stellung oder Position PV des Stellgliedes 2 ein anderes Teilungsverhältnis des Spannungsteilers 6 und somit eine andere Signalspannung US zugeordnet. In der Vorrichtung gemäß dem dritten Ausführungsbeispiel bildet der verstellbare Widerstand RV somit ein stufenloses Meßglied. Die Signalspannung hängt dabei monoton von dem Hubweg des Stellgliedes 2 ab und ist insbesondere proportional zu dem Hubweg des Stellgliedes 2.

Es versteht sich, daß je nach Anforderungen auch eine Kombination von verstellbaren Widerständen und diskreten Schaltem vorliegen kann. Anstelle eines verstellbaren Widerstandes können auch andere Meßglieder wie etwa ein Inkrementalgeber verwendet werden. Hierbei würde eine Bewegung des Stellgliedes 2 als Anzahl von Impulsen an die Prozessoreinheit 13 gemeldet, so daß ebenso eine im Ergebnis stufenlose Messung der Stellgliedposition ermöglicht ist. Eine solche Anordnung könnte teilweise oder vollständig ohne ein Widerstandsnetzwerk realisiert werden.

Sämtliche der Ausführungsbeispiele, in besonderem Maße jedoch das dritte Ausführungsbeispiel sind geeignet, das zeitliche Verhalten des Stellelements 1 in Reaktion auf eine Bestromung durch die Endstufe 14 oder auch auf Umgebungsparameter (Umgebungstemperatur) zu bestimmen. Solcherart gemessene Parameter, die Umgebungsvariablen beinhalten, können wiederum in einen Software-Algorithmus der Prozessoreinheit einfließen, um eine möglichst optimale Steuerung des Luftklappensystems und somit des Kühlsystems des Fahrzeugs zu ermöglichen.

Für jedes der Ausführungsbeispiele ist es möglich, die Position des Stellgliedes 2 mittels einer sehr kurzen Bestromung abzufragen, so daß zur reinen Positionsbestimmung, etwa als Selbsttest beim Fahrzeugstart, faktisch keine relevante Heizleistung eingebracht werden muß.

## Patentansprüche

1. Vorrichtung zur Steuerung eines Luftklappensystems eines Kraftfahrzeugs, umfassend ein Stellelement (1) mit einem beweglichen Stellglied (2), wobei zumindest eine Luftklappe des Luftklappensystems mittels des Stellgliedes (2) antreibbar bewegbar ist, und eine Messvorrichtung (4, 5, 6) zur Messung der Position des Stellgliedes (2), wobei eine erste Position (P1) des Stellgliedes (2) mittels der Messvorrichtung (4, 5, 6) auslesbar und in ein elektrisches Signal (US) übertragbar ist, wobei mittels der Messvorrichtung (4, 5, 6) zumindest eine zweite Position (P2) des Stellgliedes auslesbar und in ein elektrisches Signal (US) übertragbar ist, wobei das Luftklappensystem Bestandteil eines Hauptkühlers eines Kühlsystems für einen Verbrennungsmotor des Kraftfahrzeugs ist und das Stellelement (1) als Dehnstoffelement ausgebildet ist, und das Dehnstoffelement (1) eine Heizeinrichtung umfasst, wobei die Heizeinrichtung mittels einer Versorgungsspannung (UV) betreibbar ist, wobei die Messvorrichtung (4, 5, 6) und das Stellelement (1) als Baueinheit (11) ausgebildet sind, wobei die Baueinheit (11) mit einer ihr zugeordneten Steuereinheit (12) mittels genau einer elektrischen Signalleitung (10) zur Meldung der Stellgliedposition (P1, P2, P3, PV) verbunden ist und wobei das elektrische Signal (US) mittels eines Spannungsteilers (6) aus der Versorgungsspannung (UV) generierbar ist.

2. Vorrichtung nach Anspruch 1, **dadurch gekennzeichnet, dass** die Messvorrichtung (4, 5, 6) einen ersten Schalter (4) und einen zweiten Schalter (5) umfasst, wobei der erste Schalter (4) durch Erreichen der ersten Position (P1) des Stellgliedes (2) und der zweite Schalter (5) durch Erreichen der zweiten Position (P2) des Stellgliedes (2) betätigbar ist.

3. Vorrichtung nach Anspruch 2, **dadurch gekennzeichnet, dass** die Messvorrichtung (4, 5, 6) einen dritten Schalter (20) umfasst, wobei der dritte Schalter (20) durch Erreichen der dritten Position (P3) des Stellgliedes (2) betätigbar ist.

4. Vorrichtung nach einem der Ansprüche 1 bis 3, **dadurch gekennzeichnet, dass** die Messvorrichtung ein stufenloses Messglied (RV) umfasst, wobei in einem Bewegungsbereich des Stellgliedes (2) die Position (PV) des Stellgliedes (2) in ein elektrisches Signal (US) umwandelbar ist.

5. Vorrichtung nach Anspruch 4, **dadurch gekennzeichnet, dass** das stufenlose Messglied (RV) einen verstellbaren elektrischen Widerstand umfasst.

6. Vorrichtung nach einem der Ansprüche 1 bis 5, **dadurch gekennzeichnet, dass** den auslesbaren Positionen (P1, P2, P3, PV) des Stellgliedes (2) jeweils eine unterschiedliche elektrische Spannung der Signalleitung (10) zugeordnet ist.

7. Vorrichtung nach einem der Ansprüche 1 bis 6, **dadurch gekennzeichnet, dass** das elektrische Signal (US) mittels einer prozessorgesteuerten Steuerschaltung (13) auslesbar ist.

## Claims

1. A device for controlling an air flap system of a motor vehicle, comprising a control element (1) with a movable actuator (2), wherein at least one air flap of the air flap system can be drivably moved by means of the actuator (2), and a measuring device (4, 5, 6) for measuring the position of the actuator (2), wherein a first position (P1) of the actuator (2) can be read by means of the measuring device (4, 5, 6) and converted into an electric signal (US), wherein at least one second position (P2) of the actuator can be read by means of the measuring device (4, 5, 6) and converted into an electric signal (US), wherein the air flap system is a component of a main cooler of a cooling system for an internal combustion engine of the motor vehicle and the control element (1) is designed as an expansion element and the expansion element (1) comprises a heating apparatus, wherein the heating apparatus can be operated by means of a supply voltage (UV), wherein the measuring device (4, 5, 6) and the control element (1) are designed as a structural unit (11), wherein the structural unit (11) is connected to an assigned control unit (12) by means of exactly one electric signal line (10) for reporting actuator position (P1, P2, P3, PV) and wherein the electric signal (US) can be generated from the supply voltage (UV) by means of a voltage divider (6).

2. The device according to claim 1, **characterised in that** the measuring device (4, 5, 6) comprises a first switch (4) and a second switch (5), wherein the first switch (4) can be actuated by reaching the first position (P1) of the actuator (2) and the second switch (5) can be actuated by reaching the second position (P2) of the actuator (2).

3. The device according to claim 2, **characterised in that** the measuring device (4, 5, 6) comprises a third switch (20), wherein the third switch (20) can be actuated by reaching the third position (P3) of the actuator (2).

4. The device according to one of claims 1 to 3, **characterised in that** the measuring device comprises a continuous measuring element (RV), wherein the position (PV) of the actuator (2) can be converted into an electric signal (US) in a motion range of the actuator (2).

5. The device according to claim 4, **characterised in that** the continuous measuring element (RV) comprises an adjustable electric resistance.

6. The device according to one of claims 1 to 5, **characterised in that** a respective different electric voltage of the signal line (10) is assigned to the readable positions (P1, P2, P3, PV) of the actuator (2) .

7. The device according to one of claims 1 to 6, **characterised in that** the electric signal (US) can be read by means of a processor-controlled control circuit (13).

## Revendications

1. Dispositif de commande d'un système de volets d'air d'un véhicule automobile, ledit dispositif comprenant un élément de réglage (1) comportant un actionneur mobile (2), où au moins un volet d'air du système de volets d'air peut être déplacé, par entraînement, au moyen de l'actionneur (2), et comprenant un dispositif de mesure (4, 5, 6) servant à la mesure de la position de l'actionneur (2), où une première position (P1) de l'actionneur (2) peut être lue au moyen du dispositif de mesure (4, 5, 6) et transposée en un signal électrique (US), où au moins une deuxième position (P2) de l'actionneur peut être lue au moyen du dispositif de mesure (4, 5, 6) et transposée en un signal électrique (US), où le système de volets d'air fait partie d'un refroidisseur principal d'un système de refroidissement pour un moteur à combustion interne du véhicule automobile, et l'élément de réglage (1) est conçu comme un élément thermostatique, et l'élément thermostatique (1) comprend un dispositif de chauffage où le dispositif de chauffage peut être actionné au moyen d'une tension d'alimentation (UV), où le dispositif de mesure (4, 5, 6) et l'élément de réglage (1) sont conçus comme un ensemble unitaire (11) où l'ensemble unitaire (11) est relié à une unité de commande (12) qui lui est associée, au moyen précisément d'une ligne de signaux électriques (10) servant à la notification de la position de l'actionneur (P1, P2, P3, PV), et où le signal électrique (US) peut être généré au moyen d'un diviseur de tension (6), à partir de la tension d'alimentation (UV).

2. Dispositif selon la revendication 1, **caractérisé en ce que** le dispositif de mesure (4, 5, 6) comprend un premier interrupteur (4) et un deuxième interrupteur (5), où le premier interrupteur (4) peut être actionné en parvenant à la première position (P1) de l'actionneur (2), le deuxième interrupteur (5) pouvant être actionné en parvenant à la deuxième position (P2) de l'actionneur (2).

3. Dispositif selon la revendication 2, **caractérisé en ce que** le dispositif de mesure (4, 5, 6) comprend un troisième interrupteur (20), où le troisième interrupteur (20) peut être actionné en parvenant à la troisième position (P3) de l'actionneur (2).

4. Dispositif selon l'une quelconque des revendications 1 à 3, **caractérisé en ce que** le dispositif de mesure comprend un organe de mesure (RV) fonctionnant en continu, où, dans une zone de mouvement de l'actionneur (2), la position (PV) de l'actionneur (2) peut être transformée en un signal électrique (US).

5. Dispositif selon la revendication 4, **caractérisé en ce que** l'organe de mesure (RV) fonctionnant en continu comprend une résistance électrique réglable.

6. Dispositif selon l'une quelconque des revendications 1 à 5, **caractérisé en ce qu'**une tension électrique de la ligne de signaux (10), qui est différente, est associée à chaque fois aux positions (P1, P2, P3, PV) de l'actionneur (2), qui peuvent être lues.

7. Dispositif selon l'une quelconque des revendications 1 à 6, **caractérisé en ce que** le signal électrique (US) peut être lu au moyen d'un circuit de commande (13) piloté par processeur.
